# EUROPÄISCHE PATENTANMELDUNG

(11) **EP 1 705 461 A1**
(43) Veröffentlichungstag der Anmeldung: **27.09.2006**
(21) Anmeldenummer: 05006459.1
(22) Anmeldetag: 23.03.2005
(51) Int. Cl.: G01D 4/00

(54) **Erfassung von Verbrauchsdaten mithilfe von Verbrauchsdatenerfassungsvorrichtungen und Datensammelvorrichtungen**

(71) Anmelder: BFW WERNER VOELK GMBH, 82166 Gräfelfing (DE)
(72) Erfinder: Springl, Stephan BFW Werner Völk GmbH, 82166 Gräfelfing (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zum Erfassen von Verbrauchsdaten von Verbrauchem, umfassend: Vorsehen von mindestens einer Verbrauchsdatenerfassungsvorrichtung zum Erfassen von Verbrauchsdaten an einem der Verbraucher und von mindestens einer anderen Verbrauchsdatenerfassungsvorrichtung an einem anderen der Verbraucher, wobei jede Verbrauchsdatenerfassungsvorrichtung jeweils zum Senden von Verbrauchsdaten umfassenden Daten konfiguriert sind, Vorsehen von mindestens einer Datensammelvorrichtung, die zum Empfangen der von Verbrauchsdatenerfassungsvorrichtungen gesendeten Daten konfiguriert ist, sowie gegebenenfalls wiederholtes Initiieren des Sendens der die Verbrauchsdaten umfassenden Daten von jeder Verbrauchsdatenerfassungsvorrichtung und des Empfangens der gesendeten Daten durch jede Datensammelvorrichtung, Auslesen der von jeder Datensammelvorrichtung empfangenen Daten Ermitteln auf Grundlage der ausgelesenen Daten, ob von mindestens einer der Verbrauchsdatenerfassungsvorrichtungen keine Daten von mindestens einer Datensammelvorrichtung empfangen worden sind, Vorsehen von mindestens einer weiteren Datensammelvorrichtung für jede Verbrauchsdatenerfassungsvorrichtung, deren gesendete Daten keine der mindestens einen Datensammelvorrichtung empfangen hat, bis ermittelt wird, dass die von jeder Verbrauchsdatenerfassungsvorrichtung gesendeten Daten von mindestens einer Datensammelvorrichtung empfangen worden sind. Die Erfindung betrifft ebenso eine in dem Verfahren verwendete Auslesevorrichtung und ein Funksystem, das unter Verwendung der Auslesevorrichtung konfiguriert ist.

## Beschreibung

### Gebiet der Erfindung

Die vorliegende Erfindung betrifft ein Verfahren zur Erfassung von Verbrauchswerten mit Verbrauchsdatenerfassungsvorrichtungen und Datensammelvorrichtungen und insbesondere ein Verfahren zur Erfassung von Verbrauchswerten mit einer optimierten Anordnung von Datensammelvorrichtungen zum Empfangen der von den Verbrauchsdatenerfassungsvorrichtungen gesendeten Verbrauchsdaten. Die Erfindung betrifft weiterhin eine Vorrichtung zum Auslesen der Datensammelvorrichtungen und zur Datenanalyse in Hinblick auf die optimierte Anordnung.

### Stand der Technik

Zur Erfassung von Energieverbrauchswerten in der Haustechnik werden zunehmend funkbasierte Systeme eingesetzt, die mit Funksendern ausgestattete Verbrauchsdatenerfassungsgeräte, die an den Verbrauchern installiert sind, und Datensammelvorrichtungen, welche die von den Verbrauchsdatenerfassungsgeräten gesendeten Verbrauchsdaten empfangen, umfassen.

Die Funkübertragung erfolgt in der Regel in den ISM-Bändem (434 MHz oder 868 MHz) oder in dem Bandbereich des Global System for Mobile Communication (GSM). Die Datensammelvonichtungen sind typischerweise öffentlich, z.B. im Treppenhaus, zugänglich. Die Ablesung und Abrechung von Verbrauchswerten, wie Wärme- und Wasserkosten, in Wohnungen sowie gewerblich genutzten Räumen erfolgt im allgemeinen einmal jährlich.

Funkbasierte Systeme zur elektronischen Verbrauchsdatenerfassung bieten insbesondere den Vorteil, dass eine Koordination mit den Nutzern der Wohnungen bzw. gewerblichen Räume weitgehend entfallen kann und deren Privatsphäre durch den Ablesedienst, der die Datensammelvorrichtungen auszulesen hat, ungestört bleiben kann. Wenn die Datensammelvomchtungen ihrerseits mit Sendern ausgestattet sind (Repeater), kann das Ablesen in sogenannten Walk-by- oder Drive-by-Vertahren erfolgen, gemäß denen bei hinreichender Funkleistung der Ablesedienst das Gebäude selbst nicht zu betreten braucht.

Es stellt sich jedoch in dem Stand der Technik ein dringendes Problem der Verlässlichkeit der funkbasierten elektronischen Verbrauchsdatenerfassung und dieses umso mehr, als eine solche Datenerfassung gegenüber konventionellen Verfahren mithilfe von beispielsweise Verdunstem als Heizkostenverteilern deutlich kostenintensiver ist.

Im Extremfall wird erst bei der jährlichen Abrechnung festgestellt, dass ein oder mehrere Verbrauchsdatenerfassungsgeräte keine Daten senden und/oder ein oder mehrere Datensammelvorrichtungen keine oder nicht von sämtlichen jeweils vorgesehenen Verbrauchsdatenerfassungsgeräten Daten empfangen. Dieses Problem durch häufige Kontrollen zu umgehen ist nicht nur unökonomisch, sondem nimmt vollständig den erwünschten Vorteil des Schutzes der Privatsphäre und der sich erübrigenden Absprachen mit den Kunden.

Das genannte Problem resultiert nicht nur aus möglichen Defekten der Geräte, sondern insbesondere prinzipiell aus der Tatsache, dass die Funkreichweiten in Gebäuden starken Schwankungen unterliegen. Es ist somit a priori unbekannt, wie viele Datensammelvorrichtungen an welchen Positionen anzuordnen sind, um den Empfang sämtlicher von den Verbrauchsdatenerfassungsgeräten gesendeten Daten zu gewährleisten.

Da zudem die Kosten für die Datensammelvorrichtungen deutlich über denen für die Verbrauchsdatenerfassungsgeräte liegen, verbietet sich, wie auch gegebenenfalls aus ästhetischen Gründen, eine die Verlässlichkeit hinreichend erhöhende Rendundanz der Datensammelvorrichtungen. Insbesondere in großen Liegenschaften, wie beispielsweise großen Bürogebäuden oder industriellen Gebäudekomplexen ist darüber hinaus ein Ausmessen einer jeglichen Funkstrecke durch ein entsprechendes Fachpersonal aus wirtschaftlichen und zeitlichen Gründen unmöglich.

Der vorliegenden Erfindung liegt somit die Aufgabe zugrunde, die Verlässlichkeit und die Wirtschaftlichkeit der funkbasierten elektronischen Verbrauchsdatenerfassung und insbesondere der Erfassung der Verbrauchsdaten eines Heizungssystems zu erhöhen.

### Beschreibung

Das obige Problem wird durch ein Verfahren nach Anspruch 1 und durch eine Vorrichtung nach Anspruch 8 sowie durch ein Funksystem nach Anspruch 13 gelöst. Gemäß Anspruch 1 wird ein Verfahren zum Erfassen von Verbrauchsdaten von Verbrauchern zur Verfügung gestellt, welches die Schritte umfasst:

Verfahren zum Erfassen von Verbrauchsdaten von Verbrauchern, umfassend:
a) Vorsehen von mindestens einer Verbrauchsdatenerfassungsvorrichtung zum Erfassen von Verbrauchsdaten an einem der Verbraucher und von mindestens einer anderen Verbrauchsdatenerfassungsvorrichtung an einem anderen der Verbraucher, wobei jede Verbrauchsdatenerfassungsvorrichtung jeweils zum Senden von Verbrauchsdaten umfassenden Daten konfiguriert ist;
b) Vorsehen von mindestens einer Datensammelvorrichtung, die zum Empfangen der von Verbrauchsdatenerfassungsvorrichtungen gesendeten Daten konfiguriert ist;
c) Initiieren des Sendens der die Verbrauchsdaten umfassenden Daten von jeder Verbrauchsdatenerfassungsvorrichtung und des Empfangens der gesendeten Daten durch jede Datensammelvorrichtung;
d) Auslesen der von jeder Datensammelvorrichtung empfangenen Daten;
e) Ermitteln auf Grundlage der ausgelesenen Daten, ob von mindestens einer der Verbrauchsdatenerfassungsvorrichtungen keine Daten von mindestens einer Datensammelvorrichtung empfangen worden sind;
f) Vorsehen von mindestens einer weiteren Datensammelvorrichtung für jede Verbrauchsdatenerfassungsvorrichtung, deren gesendete Daten keine der mindestens einen Datensammelvorrichtung empfangen hat; und
g) Wiederholen der Schritte c) - f) bis in Schritt e) ermittelt wird, dass die von jeder Verbrauchsdatenerfassungsvorrichtung gesendeten Daten von mindestens einer Datensammelvorrichtung empfangen worden sind.

Die Verbraucher umfassen insbesondere Heizkörper, die Verbrauchsdaten können den Verbrauch von Wärme, Wasser, Strom, Gas etc. umfassen. Beispiele für die Verbrauchsdatenerfassungsvorrichtungen sind Heizkostenverteiler sowie Wärme-, Wasser- und Stromzähler.

Die Verbrauchsdatenerfassungsvorrichtungen sind mit Funksendern gemäß dem Stand der Technik ausgestattet, die beispielsweise GSM- oder ISM-Bänder nutzen können. Eine Verwendung der Bluetooth-Technologie ist ebenfalls möglich.

Verbrauchsdatenerfassungsvorrichtungen, die in Schritt e) des Verfahrens ermittelt werden, werden, wenn sie defekt sind, so dass deshalb keine Daten von ihnen empfangen werden, gegen intakte Verbrauchsdatenerfassungsvorrichtungen ausgetauscht. Die in Schritt f) des Verfahrens sendenden Verbrauchsdatenerfassungsvorrichtungen sind intakt.

Das Verfahren ermöglicht eine verlässliche Verbrauchsdatenerfassung, wobei in Schritt g) bei ausreichender Installationserfahrung und Qualität der verwendeten Vorrichtungen in der Praxis eine Beschränkung auf die Fälle von keiner oder einer Wiederholung möglich ist.

Die Datensammelvorrichtungen können vorteilhafterweise technisch so konfiguriert sein, dass eine jede von ihnen von einer jeden der Verbrauchsdatenerfassungsvorrichtungen gesendete Daten empfangen kann. Das Vorsehen der Datensammelvorrichtungen mag vorteilhafterweise durch ein zunächst provisorisches Anbringen an möglichen endgültigen Positionen, z.B. mithilfe von geeigneten Haftbändem, erfolgen. Das Initiieren des Sendens und Empfangens kann das Einschalten des Sende- und Empfangsbetriebs umfassen. Das Auslesen der Daten der Datensammelvorrichtungen erfolgt mit einer Auslesevorrichtung. Dieselbe Vorrichtung, mit der die von den Datensammelvorrichtungen empfangenen Daten ausgelesen werden, kann vorteilhafterweise für das Initüeren des Sendens und Empfangens verwendet werden.

In nachfolgenden Schritten können, wie im Stand der Technik, die Verbrauchsdatenerfassungsvorrichtungen für ein periodisches oder um einen einmaligen Termin gehäuftes Senden eingerichtet und die Datensammelvorrichtungen zu einem bestimmten Termin lokal oder drahtlos abgelesen werden.

Das hier offenbarte Verfahren gewährleistet, dass die von jedem Verbraucher mithilfe einer jeweiligen Verbrauchsdatenerfassungsvorrichtung erfassten Verbrauchsdaten an zumindest eine Datensammelvorrichtung gesendet und von dieser empfangen werden. Das Verfahren ist unempfindlich gegenüber den konkreten, beispielsweise durch die Bausubstanz gegebenen, Funkausbreitungseigenschaften.

Die Ermittlung, ob von mindestens einer der Verbrauchsdatenerfassungsvorrichtungen keine Daten von mindestens einer Datensammelvorrichtung empfangen worden sind kann automatisiert erfolgen. Es liegt eine Verbesserung gegenüber dem Stand der Technik hinsichtlich der Verlässlichkeit und des Zeitaufwands vor. Zudem sind keine technisch besonders geschulten Bedienpersonen ertorderlich.

In Schritt c) des Verfahrens kann jede Verbrauchsdatenerfassungsvorrichtung so initiiert werden, dass sie gemäß einem zuvor erstellten Zeitplan sendet. Ein solcher Zeitplan wird vorteilhafterweise so erstellt, dass keine zwei der Verbrauchsdatenerfassungsvorrichtungen gleichzeitig senden, um zu vermeiden, dass, da das Senden i.a. auf demselben Band erfolgt, Daten der gleichzeitig sendenden Verbrauchsdatenerfassungsvorrichtungen nicht korrekt empfangen werden können.

In dem erfindungsgemäßen Verfahren können insbesondere mindestens zwei Datensammelvorrichtungen vorgesehen werden und das Verfahren kann bevorzugter Weise die weiteren Schritte umfassen:

Ermitteln und Entfernen auf Grundlage der ausgelesenen Daten derjenigen der Datensammelvorrichtungen, die keine der von den Verbrauchsdatenerfassungsvorrichtungen gesendeten Verbrauchsdaten empfangen haben und/oder

Ermitteln und Entfernen derjenigen der Datensammelvorrichtungen, die entfernt werden können, ohne dass dadurch von mindestens einer der Verbrauchsdatenerfassungsvorrichtungen gesendete Daten von keiner Datensammelvorrichtung empfangen werden.

Die genannten Ermittlungs- und Entfemungsschritte können bevorzugt nach dem oben angegebenen Schritt g) erfolgen.

Gemäß dieser Weiterbildung werden die Datensammeivorrichtungen zunächst in einer praktikablen Überzahl, wie von der Bedienperson aufgrund ihrer Erfahrung als benötigt erwartet, vorgesehenen. Die Ermittlungsschritte erfolgen vorteilhafterweise automatisch.

Diese Weiterbildung erlaubt eine wirtschaftliche, verlässliche und zum wesentlichen Teil automatisiert ausgewählte optimierte Anordnung von Datensammelvorrichtungen. Insbesondere ist es somit möglich, von den zunächst provisorisch angebrachten Datensammelvorrichtungen so viele endgültig zu verwenden, wie es für einen sicheren Erfassungsbetrieb notwendig ist. Die Anzahl dieser notwendigen Datensammelvorrichtungen wird erwartungsgemäß niedriger liegen als in dem Fall einer Installation ohne Verwendung des erfindungsgemäßen Verfahrens durch einen erfahrenen Installateur.

Die vorzugsweise zunächst provisorisch angebrachten Datensammelvorrichtungen können nach dem Entfernen derjenigen Datensammelvorrichtungen, die entfernt werden können, ohne dass dadurch von mindestens einer der Verbrauchsdatenerfassungsvorrichtungen gesendete Daten von keiner der Datensammelvorrichtungen empfangen werden, fest installiert werden.

Gemäß einer Weiterbildung kann auf Grundlage der ausgelesenen Daten en detail, vorzugsweise voll automatisiert, ermittelt werden, welche der Datensammelvorrichtungen von welcher der Verbrauchsdatenerfassungsvorrichtungen gesendete Daten empfangen hat, und es können auf der Grundlage dieser Ermittlung Kombinationen von Datensammelvorrichtungen berechnet werden, die entfernt werden können, ohne dass dadurch von irgendeiner der Verbrauchsdatenerfassungsvorrichtungen gesendete Daten von keinem der Datensammelvorrichtungen empfangen werden.

Somit wird ein Verfahren mit den oben angegeben Schritten a) bis g) zur Verfügung gestellt, worin mindestens zwei Datensammelvorrichtungen vorgesehen werden und das weiterhin die, beispielsweise den Schritten a) bis g) nachfolgenden, Schritte umfasst:
auf Grundlage der ausgelesenen Daten Ermitteln, welche der mindestens zwei Datensammelvorrichtungen von welcher der Verbrauchsdatenerfassungsvorrichtungen gesendete Daten empfangen hat, und auf der Grundlage dieser Ermittlung

Generieren einer Liste mit, insbesondere bewerteten, Listeneinträgen von Kombinationen von Datensammelvorrichtungen, die entfernt werden können, ohne dass dadurch von mindestens einer der Verbrauchsdatenerfassungsvorrichtungen gesendete Daten von keiner der nicht entfernten Datensammelvorrichtung empfangen werden, und

Entfernen mindestens einer der mindestens zwei Datensammelvorrichtungen gemäß mindestens einem Listeneintrag.

Der triviale Fall einer erlaubten Entfernung lediglich einer Datensammelvorrichtung ist als Kombination dieser mit sich selbst explizit und beabsichtigt enthalten. Wird ermittelt, dass keine der mindestens zwei Datensammelvorrichtungen entfernt werden kann, ohne dass dadurch von mindestens einer der Verbrauchsdatenerfassungsvorrichtungen gesendete Daten von keiner der nicht entfernten mindestens einen Datensammelvorrichtung empfangen werden, wird gemäß keinem Listeneintrag keine Datensammelvorrichtung entfernt.

Das Entfernen einer oder mehrerer Datensammelvorrichtungen gemäß mindestens einem Listeneintrag erfolgt derart, dass zunächst die genannte Liste in der zum Auslesen der Datensammelvorrichtungen verwendeten Vorrichtung (Auslesevorrichtung) generiert und beispielsweise mithilfe eines Displays der Vorrichtung angezeigt wird. Eine Bedienperson kann für jeden Listeneintrag erkennen, welche Datensammelvorrichtungen entfernt werden sollen und nach Auswahl die entsprechenden Datensammelvorrichtungen entfemen.

Somit wird eine Bedienperson in die Lage versetzt, zwischen mehreren Alternativen der Anordnung der Datensammelvorrichtungen zu wählen, die sämtliche den Empfang von von einer jeden Verbrauchsdatenerfassungsvorrichtung gesendeten Daten garantieren und gegebenenfalls unterschiedliche Rendundanzen - mehrere Datensammelvorrichtungen empfangen Daten von derselben Verbrauchsdatenerfassungsvorrichtung - aufweisen. Eine Bewertung der ermittelten möglichen Kombinationen von Datensammelvorrichtungen kann beispielsweise nach Wirtschaftlichkeit, Verlässlichkeit oder auch ästhetischen Gesichtspunkten erfolgen und unterstützt die Bedienperson bei der Auswahl.

Wünschenswerterweise können die von den Verbrauchsdatenerfassungsvorrichtung gesendeten Daten Daten enthalten, die die jeweils sendende Verbrauchsdatenerfassungsvorrichtung eindeutig identifizieren. Somit kann das Ermitteln,
ob von mindestens einer der Verbrauchsdatenerfassungsvorrichtungen keine. Daten von mindestens einer Datensammelvorrichtung empfangen worden sind und/oder
derjenigen der Datensammelvorrichtungen, die keine der von den Verbrauchsdatenerfassungsvorrichtungen gesendeten Verbrauchsdaten empfangen haben und/oder
derjenigen der Datensammelvorrichtungen, die entfernt werden können, ohne dass dadurch von mindestens einer der Verbrauchsdatenerfassungsvorrichtungen gesendete Daten von keiner der Datensammelvorrichtung empfangen werden und/oder
welche der Datensammelvorrichtungen von welcher der Verbrauchsdatenerfassungsvorrichtungen gesendete Daten empfangen hat
auf der Grundlage der Identifikationsdaten erfolgen.

Somit können die obigen Ermittlungsschritte relativ einfach technisch realisierbar und verlässlich durchgeführt werden.

Es kann vorteilhaft sein, dass die in den dem Verfahren zum Erfassen von Verbrauchsdaten von Verbrauchern verwendeten Datensammelvorrichtungen empfangene Daten umfassende Daten senden. Die von den Datensammelvorrichtungen gesendeten Daten können von mindestens einer zentralen stationären oder von mindestens einer zentralen mobilen Empfangseinrichtung empfangen werden.

Die mindestens eine zentrale stationäre Empfangseinrichtung kann insbesondere eine der Datensammelvorrichtungen selbst sein. Diese kann beispielsweise als eine Mastersammelvorrichtung sämtliche von sämtlichen Datensammelvorrichtungen gesammelte Daten sammeln.

Die vorliegende Erfindung stellt weiterhin eine Auslesevorrichtung zum Auslesen mindestens einer Datensammelvorrichtung zur Verfügung, die zum Empfangen von Daten, die von mindestens einer Verbrauchsdatenerfassungsvorrichtung zum Erfassen von Verbrauchsdaten eines Verbrauchers gesendet werden, konfiguriert ist, umfassend:
ein Speichermedium;
mindestens eine Schnittstelle zum Datenaustausch mit Datensammelvorrichtungen;
und wobei die Auslesevorrichtung weiterhin konfiguriert ist, auf Grundlage der ausgelesenen Daten zu ermitteln:
   ob von mindestens einer der Verbrauchsdatenerfassungsvorrichtungen keine Daten von mindestens einer Datensammelvorrichtung empfangen worden sind und/oder
   diejenigen der Datensammelvorrichtungen, die keine der von den Verbrauchsdatenerfassungsvorrichtungen gesendeten Verbrauchsdaten empfangen haben und/oder
   diejenigen der Datensammelvorrichtungen, die entfernt werden können, ohne dass dadurch von mindestens einer der Verbrauchsdatenerfassungsvorrichtungen gesendete Daten von keiner der Datensammelvorrichtung empfangen werden und/oder
   welche der Datensammelvorrichtungen von welcher der Verbrauchsdatenerfassungsvorrichtungen gesendete Daten empfangen hat, wobei die Vorrichtung weiterhin konfiguriert ist, auf Grundlage dieser Ermittlung, eine Liste mit, insbesondere bewerteten, Listeneinträgen von Kombinationen von Datensammelvorrichtungen, die entfernt werden können, ohne dass dadurch von mindestens einer der Verbrauchsdatenerfassungsvorrichtungen gesendete Daten von keiner der nicht entfernten Datensammelvorrichtung empfangen werden, zu generieren.

Die erfindungsgemäße Auslesevorrichtung kann weiterhin so konfiguriert sein, dass sie das Empfangen der gesendeten Daten durch die mindestens eine Datensammelvorrichtung initiiert. Die erfindungsgemäße Auslesevorrichtung kann zusätzlich mindestens eine Schnittstelle zum Datenaustausch mit Verbrauchsdatenerfassungsvorrichtungen umfassen und so konfiguriert sein, dass sie das Senden von Verbrauchsdaten umfassenden Daten von der mindestens einen Verbrauchsdatenerfassungsvorrichtung und das Empfangen der gesendeten Daten durch die mindestens eine Datensammelvorrichtung initiiert.

Die gemäß einer Weiterbildung zum Initiieren des Sendens der Verbrauchsdaten konfigurierte Auslesevorrichtung kann weiterhin konfiguriert sein, einen Zeitplan zu erstellen und jede Verbrauchsdatenerfassungsvorrichtung zu initiieren, gemäß dem erstellten Zeitplan zu senden.

Während des Initiierens kann die Auslesevorrichtung vorteilhafterweise ebenfalls identifikationsrelevante Daten der jeweiligen Verbrauchsdatenerfassungsvorrichtungen aufnehmen und mithilfe dieser Daten aus den Datensammelvorrichtungen ausgelesene Daten den entsprechenden Verbrauchsdatenerfassungsvorrichtungen zuordnen.

Wenn die von jeder der Verbrauchsdatenerfassungsvorrichtungen gesendeten Daten diese identifizierende Identifikationsdaten umfassen, kann die Auslesevomchtung so konfiguriert sein, dass die obigen Ermittlungsprozesse auf der Grundlage der Identifikationsdaten erfolgen.

Die Energieversorgung der Auslesevorrichtung kann über eine Batterie oder einen Akku erfolgen. Das Speichermedium kann eine übliche Speicherkarte sein. Die mindestens eine Schnittstelle (Interface) kann offen, ohne Festlegung auf ein Übertragungsprotokoll konfiguriert sein. Über die Schnittstelle werden die von den Datensammelvorrichtungen empfangenen Daten eingelesen, und diese werden anschließend in der Auslesevorrichtung analysiert. Vorteilhafterweise kann die Auslesevonichtung eine Anzeigevorrichtung sowie ein Touchpad zur Dateneingabe durch eine Bedienperson umfassen.

Die Erfindung stellt ein Computerprogrammprodukt zur Verfügung, das einen oder mehrere computerlesbare Datenträger umfasst, die von der Auslesevorrichtung mithilfe einer Prozessoreinheit (CPU) ausführbare Anweisungen enthalten, um zumindest die oben genannten Ermittlungsschritte sowie das Generieren der Liste auszuführen.

Des weiteren stellt die vorliegende Erfindung ein Funksystem zur Verbrauchsdatenerfassung zur Verfügung, umfassend:
mindestens eine an einem Verbraucher vorgesehene Verbrauchsdatenerfassungsvorrichtung zum Erfassen von Verbrauchsdaten und eine an einem anderen Verbraucher vorgesehene andere Verbrauchsdatenerfassungsvorrichtung, wobei jede der Verbrauchsdatenerfassungsvorrichtungen einen Funksender zum Senden von Verbrauchsdaten umfassenden Daten umfasst;
mindestens zwei Datensammelvorrichtungen, die jeweils einen Empfänger zum Empfangen der gesendeten Verbrauchsdaten umfassenden Daten umfassen;
eine Auslesevorrichtung gemäß einer der oben erwähnten Weiterbildungen;
und worin die Anzahl und die Positionen der mindestens zwei Datensammelvorrichtungen durch die Resultate der Ermittlungsvorgänge der Auslesevorrichtung bestimmt sind.

Beispielsweise enthält das Funksystem somit ausschließlich Datensammelvorrichtungen, die jeweils von nur von einer Verbrauchsdatenerfassungsvorrichtung gesendete Daten empfangen.

Ein derart ausgestaltetes Funksystem zur Verbrauchsdatenerfassung zeigt eine aus dem Stand der Technik nicht bekannte Verlässlichkeit bei hoher Wirtschaftlichkeit der Installation und des Betriebs.

In einer Weiterbildung des Funksystems sendet jede der Datensammelvorrichtungen empfangene Daten umfassende Daten. Die von solchen Repeatem gesendeten Daten können von mindestens einer zentralen stationären oder von mindestens einer zentralen mobilen Empfangseinrichtung empfangen werden, wobei die mindestens eine zentrale stationäre Empfangseinrichtung insbesondere eine der Datensammelvorrichtungen selbst sein kann.

Eine besonders vorteilhafte Anwendung der Erfindung betrifft die verbesserte Erfassung von Wärmeverbrauchsdaten, auf welcher eine Heizkostenabrechnung basiert. Es wird deshalb eines der obigen Funksysteme zur Verbrauchsdatenerfassung von der Erfindung zur Verfügung gestellt, worin jeder der Verbraucher jeweils einen Heizkörper und jede der Verbrauchsdatenerfassungsvorrichtungen jeweils einen Heizkostenverteiler umfasst.

Weitere Merkmale und eine beispielhafte Ausführungsform der vorliegenden Erfindung, werden nachfolgend anhand der einzigen Zeichnung näher erläutert. Es versteht sich, dass die Ausführungsform nicht den Bereich der vorliegenden Erfindung erschöpft. Es versteht sich weiterhin, dass einige oder sämtliche der im Weiteren beschriebenen Merkmale auch auf andere Weise miteinander kombiniert werden können.

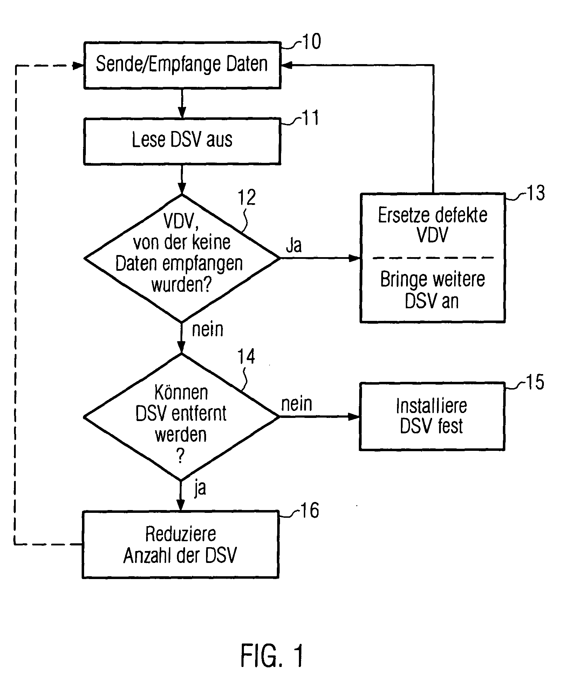

Figur 1 stellt ein Blockdiagramm dar, das der Illustration einiger Schritte einer beispielhaften Ausführungsform des erfindungsgemäßen Verfahrens dient.

Die Erfindung wird im folgenden anhand eines Beispiels für die Erfassung von Wärmeverbrauchsdaten eines Heizungssystems erläutert. Nach einer Installation von mit Funksendern ausgestatteten Verbrauchsdatenerfassungsvorrichtungen (VDV), in diesem Beispiel Funk-Heizkostenverteilem, an Verbrauchern, in diesem Beispiel Heizkörpern, und einem provisorischen Anbringen einer Vielzahl von Datensammelvorrichtungen (DSV) außerhalb der zu erfassenden Räume, die die Verbraucher aufweisen, werden die VDV zum Senden und die DSV zum Empfangen gebracht.

Als Heizkostenverteiler können, gegebenenfalls gering modifiziert, solche, wie sie aus dem Stand der Technik bekannt sind, zum Einsatz kommen. Beispielsweise umfassen sie jeweils zwei Temperaturfühler, die übereinander in einem Gehäuse an einem Heizkörper in wärmeleitender Verbindung mit demselben angebracht werden und berechnen die von dem Heizkörper abgegebene Wärme mit Hilfe einer Auswerteschaltung unter Verwendung einer Heizkörperkennlinie bzw. einer Heizkörperkennlinienschar.

Das Initiieren des Sendens und Empfangens einer jeden der VDV und DSV erfolgt mithilfe eines Auslesegeräts, welches während des Initiierens des Sendens der VDV über ein entsprechendes Interface auch von der jeweiligen VDV diese identifizierende Daten ausliest. Dasselbe Auslesegerät wird zum Auslesen der DSV, d.h. zum Auslesen der von den DSV empfangenen Daten, verwendet (s. unten).

Die VDV senden Daten, die insbesondere Verbrauchsdaten, wie die Wärmeabgabe bzw. Wärmeverbrauch eines Heizkörpers, umfassen, und die DSV empfangen diese Daten 10. Die Datenübertragung erfolgt auf dem 434 MHz-ISM-Band oder altemativ auf dem 868 MHz-ISM-Band. Anschließend werden sämtliche DSV mithilfe des Auslesegeräts ausgelesen 11. Die Daten werden in dem Auslesegerät analysiert. Insbesondere kann festgestellt werden, welche der DSV von welcher der VDV gesendete Daten empfangen hat. Weiterhin wird festgestellt, ob von einer oder mehreren VDV keine Daten empfangen worden sind 12.

Wenn von einer oder mehreren VDV keine Daten empfangen worden sind, sind diese defekt, oder es ist keine Funkverbindung zu einer der vorgesehenen DSV möglich. Daher werden enfinreder defekte VDV ausgetauscht, und/oder es werden eine oder mehrere zusätzliche DSV provisorisch angebracht 13. Es kann auf dieselbe Weise wie zuvor der Sende-/Empfangsbetrieb wiederum getestet werden. Im allgemeinen kann man sich darauf beschränken, die neu angebrachten DSV auszulesen und zu prüfen, ob diese Daten von intakten VDV, von denen zuvor keine Daten empfangen worden sind, empfangen haben.

Iterativ kann somit durch eine im wesentlichen automatisierte Auslesung und Analyse der von den DSV empfangenen Daten sichergestellt werden, dass die von sämtlichen installierten VDV gesendeten Daten von mindestens einer der DSV empfangen werden, und somit insbesondere sämtliche Verbrauchsdaten für die Verbrauchskostenerstellung verfügbar sind.

Andererseits werden vorteilhafterweise zunächst mehr DSV provisorisch angebracht, als es erwartungsgemäß zum Empfangen sämtlicher Daten, die von jeder einzelnen der VDV gesendet werden notwendig ist, d.h. es steht zu erwarten, dass mehr als eine von den DSV dieselben Daten empfangen, die von einer oder mehreren bestimmten VDV gesendet werden.

Es stellt sich somit die Frage, ob eine oder mehrere DSV auf Grundlage einer Analyse der von der Auslesevorrichtung ausgelesenen Daten entfernt werden können bzw. sollen 14. Hier lassen sich erfindungsgemäß verschiedene Strategien implementieren. Wenn keine DSV entfernt werden können, ohne dass dadurch von einer oder mehreren VDV gesendete Daten nicht mehr empfangen werden können, können die entsprechenden als notwendig erkannten DSV fest installiert werden.

"Überflüssige" DSV, d.h. solche, die ausschließlich Daten empfangen, die auch andere DSV empfangen, können entfernt werden 16, wodurch sich die Anzahl der DSV und somit die Kosten des Erfassungssystems reduzieren. Zur Sicherheit kann, beginnend mit dem Initiieren des Sendens und Empfangens der Daten, der in Figur 1 gezeigte Ablauf wiederholt werden.

Es mag jedoch auch gewünscht sein, sich nicht auf die Minimalausstattung mit DSV zu beschränken. Eine gewisse Rendundanz erhöht gegebenenfalls die Verlässlichkeit in einem solchen Maße, dass die damit verbundenen erhöhten Kosten akzeptabel erscheinen. Das erfindungsgemäße Verfahren bzw. die erfindungsgemäße Auslesevorrichtung stellt daher insbesondere über die Generierung einer Liste möglicher Kombinationen zu entfernender oder zu belassender DSV der Bedienperson eine Auswahlmöglichkeit zur Verfügung.

Gemäß der vorliegenden Ausführungsform werden die Listenelemente, die Kombinationen zu entfernender DSV aufweisen, mit einer Wertung versehen (Ranking). Die Wertung kann auf verschiedenen Qualitäten, wie Wirtschaftlichkeit und Zuverlässigkeit und/oder einer Kombination von diesen, beruhen. Eine Sortierung der Listenelemente erfolgt gemäß bekannter Verfahren.

## Patentansprüche

1. Verfahren zum Erfassen von Verbrauchsdaten von Verbrauchern, umfassend:
a) Vorsehen von mindestens einer Verbrauchsdatenerfassungsvorrichtung zum Erfassen von Verbrauchsdaten an einem der Verbraucher und von mindestens einer anderen Verbrauchsdatenerfassungsvorrichtung an einem anderen der Verbraucher, wobei jede Verbrauchsdatenerfassungsvorrichtung jeweils zum Senden von Verbrauchsdaten umfassenden Daten konfiguriert ist;
b) Vorsehen von mindestens einer Datensammelvorrichtung, die zum Empfangen der von Verbrauchsdatenerfassungsvorrichtungen gesendeten Daten konfiguriert ist;
c) Initiieren des Sendens der die Verbrauchsdaten umfassenden Daten von jeder Verbrauchsdatenerfassungsvorrichtung und des Empfangens der gesendeten Daten durch jede Datensammelvorrichtung;
d) Auslesen der von jeder Datensammelvorrichtung empfangenen Daten;
e) Ermitteln auf Grundlage der ausgelesenen Daten, ob von mindestens einer der Verbrauchsdatenerfassungsvorrichtungen keine Daten von mindestens einer Datensammelvorrichtung empfangen worden sind;
f) Vorsehen von mindestens einer weiteren Datensammelvorrichtung für jede Verbrauchsdatenerfassungsvorrichtung, deren gesendete Daten keine der mindestens einen Datensammelvorrichtung empfangen hat; und
g) Wiederholen der Schritte c) - f) bis in Schritt e) ermittelt wird, dass die von jeder Verbrauchsdatenerfassungsvorrichtung gesendeten Daten von mindestens einer Datensammelvorrichtung empfangen worden sind.

2. Verfahren gemäß Anspruch 1, worin in Schritt c) jede Verbrauchsdatenerfassungsvorrichtung so initüert wird, dass sie gemäß einem zuvor erstellten Zeitplan sendet.

3. Verfahren gemäß Anspruch 1 oder 2, weiterhin umfassend:
Ermitteln und Entfernen auf Grundlage der ausgelesenen Daten derjenigen der Datensammelvorrichtungen, die keine der von den Verbrauchsdatenerfassungsvorrichtungen gesendeten Verbrauchsdaten empfangen haben und/oder
Ermitteln und Entfernen derjenigen der Datensammelvorrichtungen, die entfernt werden können, ohne dass **dadurch** von mindestens einer der Verbrauchsdatenerfassungsvorrichtungen gesendete Daten von keiner Datensammelvonichtung empfangen werden.

4. Verfahren gemäß Anspruch 1 oder 2, worin mindestens zwei Datensammelvorrichtungen vorgesehen werden und weiterhin die nachfolgenden Schritte umfassend:
auf Grundlage der ausgelesenen Daten Ermitteln, welche der mindestens zwei Datensammelvorrichtungen von welcher der Verbrauchsdatenerfassungsvorrichtungen gesendete Daten empfangen hat, und auf der Grundlage dieser Ermittlung
Generieren einer Liste mit Listeneinträgen, die insbesondere bewertetet sein können, von Kombinationen von Datensammelvorrichtungen, die entfernt werden können, ohne dass **dadurch** von mindestens einer der Verbrauchsdatenerfassungsvorrichtungen gesendete Daten von keiner der nicht entfernten Datensammelvorrichtung empfangen werden, und
Entfernen mindestens einer der mindestens zwei Datensammelvorrichtungen gemäß mindestens einem Listeneintrag.

5. Verfahren gemäß einem der vorhergehenden Ansprüche, worin die von jeder der Verbrauchsdatenerfassungsvorrichtungen gesendeten Daten diese identifizierende Identifikationsdaten umfassen und das Ermitteln,
ob von mindestens einer der Verbrauchsdatenerfassungsvorrichtungen keine Daten von mindestens einer Datensammelvorrichtung empfangen worden sind und/oder
derjenigen der Datensammelvorrichtungen, die keine der von den Verbrauchsdatenerfassungsvorrichtungen gesendeten Verbrauchsdaten empfangen haben und/oder
derjenigen der Datensammelvorrichtungen, die entfernt werden können, ohne dass **dadurch** von mindestens einer der Verbrauchsdatenerfassungsvorrichtungen gesendete Daten von keiner der Datensammelvorrichtung empfangen werden und/oder
welche der Datensammelvorrichtungen von welcher der Verbrauchsdatenerfassungsvorrichtungen gesendete Daten empfangen hat
auf der Grundlage der Identifikationsdaten erfolgt.

6. Verfahren gemäß einem der vorhergehenden Ansprüche, worin jede der Datensammelvorrichtungen empfangene Daten umfassende Daten sendet.

7. Verfahren gemäß einem der vorhergehenden Ansprüche, worin jeder der Verbraucher jeweils einen Heizkörper umfasst und jede der Verbrauchsdatenerfassungsvorrichtungen jeweils einen Heizkostenverteiler umfasst.

8. Auslesevorrichtung zum Auslesen mindestens einer Datensammelvorrichtung, die zum Empfangen von Daten, die von mindestens einer Verbrauchsdatenerfassungsvorrichtung zum Erfassen von Verbrauchsdaten eines Verbrauchers gesendet werden, konfiguriert ist, umfassend:
ein Speichermedium;
mindestens eine Schnittstelle zum Datenaustausch mit Datensammelvorrichtungen;
und wobei die Auslesevorrichtung weiterhin konfiguriert ist, auf Grundlage der ausgelesenen Daten zu ermitteln:
ob von mindestens einer der Verbrauchsdatenerfassungsvorrichtungen keine Daten von mindestens einer Datensammelvorrichtung empfangen worden sind und/oder
diejenigen der Datensammelvorrichtungen, die keine der von den Verbrauchsdatenerfassungsvorrichtungen gesendeten Verbrauchsdaten empfangen haben und/oder
diejenigen der Datensammelvorrichtungen, die entfernt werden können, ohne dass **dadurch** von mindestens einer der Verbrauchsdatenerfassungsvorrichtungen gesendete Daten von keiner der Datensammelvorrichtung empfangen werden und/oder
welche der Datensammelvorrichtungen von welcher der Verbrauchsdatenerfassungsvorrichtungen gesendete Daten empfangen hat, wobei die Vorrichtung weiterhin konfiguriert ist, auf Grundlage dieser Ermittlung, eine Liste mit, insbesondere bewerteten, Listeneinträgen von Kombinationen von Datensammelvorrichtungen, die entfernt werden können, ohne dass **dadurch** von mindestens einer der Verbrauchsdatenerfassungsvorrichtungen gesendete Daten von keiner der nicht entfernten Datensammelvorrichtung empfangen werden, zu generieren.

9. Auslesevorrichtung gemäß Anspruch 8, weiterhin konfiguriert, das Empfangen der gesendeten Daten durch die mindestens eine Datensammelvorrichtung zu initiieren.

10. Auslesevorrichtung gemäß Anspruch einem der Ansprüche 8 oder 9, weiterhin mindestens eine Schnittstelle zum Datenaustausch mit Verbrauchsdatenerfassungsvorrichtungen umfassend und konfiguriert, das Senden von Verbrauchsdaten umfassenden Daten von der mindestens einen Verbrauchsdatenerfassungsvorrichtung zu initiieren.

11. Auslesevorrichtung gemäß Anspruch 10, weiterhin konfiguriert, einen Zeitplan zu erstellen und jede Verbrauchsdatenerfassungsvorrichtung zu initüeren, gemäß dem erstellten Zeitplan zu senden.

12. Auslesevorrichtung gemäß einem der Ansprüche 8 - 11, worin die von jeder Verbrauchsdatenerfassungsvorrichtung gesendeten Daten diese identifizierende Identifikationsdaten umfassen und das Ermitteln,
ob von mindestens einer der Verbrauchsdatenerfassungsvorrichtungen keine Daten von mindestens einer Datensammelvorrichtung empfangen worden sind und/oder
derjenigen der Datensammelvorrichtungen, die keine der von den Verbrauchsdatenerfassungsvonrichtungen gesendeten Verbrauchsdaten empfangen haben und/oder
derjenigen der Datensammelvorrichtungen, die entfernt werden können, ohne dass **dadurch** von mindestens einer der Verbrauchsdatenerfassungsvorrichtungen gesendete Daten von keiner der Datensammelvorrichtung empfangen werden und/oder
welche der Datensammelvorrichtungen von welcher der Verbrauchsdatenerfassungsvorrichtungen gesendete Daten empfangen hat
auf der Grundlage der Identifikationsdaten erfolgt.

13. Funksystem zur Verbrauchsdatenerfassung, umfassend:
mindestens eine an einem Verbraucher vorgesehene Verbrauchsdatenerfassungsvorrichtung zum Erfassen von Verbrauchsdaten und eine an einem anderen Verbraucher vorgesehene andere Verbrauchsdatenerfassungsvorrichtung, wobei jede der Verbrauchsdatenerfassungsvorrichtungen einen Funksender zum Senden von Verbrauchsdaten umfassenden Daten umfasst;
mindestens zwei Datensammelvorrichtungen, die jeweils einen Empfänger zum Empfangen der gesendeten Verbrauchsdaten umfassenden Daten umfassen;
eine Auslesevorrichtung gemäß einem der Ansprüche 7 - 10;
und worin die Anzahl und die Positionen der mindestens zwei Datensammelvorrichtungen durch die Resultate der Ermittlungsvorgänge der Auslesevorrichtung bestimmt sind.

14. Funksystem gemäß Anspruch 13, worin jede der Datensammelvorrichtungen empfangene Daten umfassende Daten sendet.

15. Funksystem gemäß Anspruch 13 oder 14, worin jeder der Verbraucher jeweils einen Heizkörper umfasst und jede der Verbrauchsdatenerfassungsvorrichtungen jeweils einen Heizkostenverteiler umfasst.
